# EUROPEAN PATENT APPLICATION

(11) **EP 1 858 097 A1**
(43) Date of publication of application: **21.11.2007**
(21) Application number: 06712295.2
(22) Date of filing: 25.01.2006
(51) Int. Cl.: H01M 8/02, H01M 4/86, H01M 8/10

(54) **MEMBRANE ELECTRODE JOINED PRODUCT, PROCESS FOR PRODUCING THE SAME, AND DIRECT METHANOL-TYPE FUEL CELL**

(30) Priority: 28.02.2005 JP 2005054026
(71) Applicant: TOAGOSEI CO., LTD., Tokyo 105-8419 (JP)
(72) Inventor: HIRAOKA, Hideki, c/o TOAGOSEI CO., LTD., Nagoya-shi, Aichi 455-0027 (JP); HAYASHI, Keizo, c/o TOAGOSEI CO., LTD., Nagoya-shi, Aichi 455-0027 (JP)
(74) Representative: Wilhelms . Kilian & Partner Patentanwälte
(86) International application number: PCT/JP2006/301100
(87) International publication number: WO 2006/092914

(57) **Abstract**

To provide an inexpensive fuel cell membrane electrode assembly that is suitable for a direct methanol fuel cell, and for which the adhesion between an electrode and a fuel cell electrolyte membrane formed from a non-fluorine polymer material is improved, a polymer electrolyte added to the electrode can cope sufficiently with a high concentration of methanol, the advantages of the electrolyte membrane can be sufficiently exhibited, peeling apart of the electrode and the membrane does not occur while running as a fuel cell, and the productivity is high.

An electrolyte membrane having a non-fluorine polymer as a substrate, and among electrodes layered on opposite sides of the electrolyte membrane, the electrode on at least one side being formed from a catalyst, an electrolyte, and a non=fluorine thermoplastic polymer.

## Description

This invention relates to an electrolyte membrane/electrode assembly, a process for producing the assembly, and a direct methanol fuel cell, the membrane electrode assembly being suitably used for an electrochemical device, and particularly for a fuel cell.

### Description of the Related Art

The performance of fuel cells, which are a type of electrochemical device employing a polymer electrolyte, has improved outstandingly due to developments in electrolyte membranes and catalyst technology in recent years, and they have been attracting attention as a power source for low-pollution automobiles or as a highly efficient power generation method. Among them, a fuel cell employing a polymer electrolyte membrane (hereinafter, called a 'solid polymer fuel cell') has a structure having an electrode in which a reaction layer having an oxidation-reduction catalyst is formed on the surface of the electrolyte membrane.

In such a solid polymer fuel cell, a reaction in which a hydrogen molecule is decomposed into protons and electrons occurs at an anode, the electrons thus generated operate an electric component and are carried to a cathode side via electric wires, and at the cathode water is generated from oxygen, protons, and electrons carried from the anode via the electric wires.

Furthermore, in a direct methanol fuel cell (also called a 'DMFC'), methanol and water are supplied to an anode, the methanol and water are reacted by means of a catalyst in the vicinity of a membrane, and protons are taken out. These fuel cells normally employ a fluorine-based polymer electrolyte membrane formed from a polyperfluoroalkylsulfonic acid membrane.

However, a polyperfluoroalkylsulfonic acid membrane has the problem that when it is used in a fuel cell in which a fuel solution is supplied directly to the cell, such as a methanol fuel cell, the methanol, etc. fuel passes through the membrane, thus causing energy loss. Furthermore, since the membrane is swollen by the methanol, etc. fuel, and its area changes greatly, problems such as a joint between an electrode and the membrane peeling apart easily occur, and there is also the problem that the fuel concentration cannot be increased. Moreover, there are the economic problems that the material itself is expensive due to it containing fluorine atoms, and since the production process is complicated and the productivity is low the cost is very high.

Because of this, there has been a desire for a polymer electrolyte membrane formed from an inexpensive hydrocarbon skeleton, for which permeability to methanol is suppressed when used in a direct methanol fuel cell, and various hydrocarbon-based electrolyte membranes have been proposed. ln fuel cell-related industries, in contrast to fluorine-containing polymer electrolyte membranes such as the polyperfluoroalkylsulfonic acid membrane, electrolyte membranes formed from polymers containing no fluorine are widely known as non-fluorine polymer electrolyte membranes or hydrocarbon-based polymer electrolyte membranes. These polymers have carbon and hydrogen as the main elements forming the polymer, and may contain nitrogen or oxygen from an amide bond or an ester bond in the structure, but have basically no fluorine in the polymer; in other words, these polymers are ones that do not have their properties changed by containing fluorine.

ln a fuel cell employing a polymer electrolyte membrane, the electrolyte membrane is normally used in a form of a membrane electrode assembly (hereinafter, called an 'MEA') in which an electrode containing a catalyst such as platinum is bonded to either side of the membrane. In this MEA, in order to form a pathway for making protons generated in the catalyst within an anode electrode move to the membrane or making protons move from the membrane to the vicinity of the catalyst on a cathode side, a polymer electrolyte is added to the interior of the electrode.

Furthermore, in such an MEA, in order to make it easy for protons to be transferred between the electrode and the electrolyte membrane and suppress any increase in internal cell resistance, it is constructed so that the electrolyte membrane and the polymer electrolyte within the electrode are always in contact with each other.

When a membrane electrode assembly is formed by using a polyperfluoroalkylsulfonic acid membrane as the fluorine-based polymer electrolyte membrane, the same polyperfluoroalkylsulfonic acid is normally used in the polymer electrolyte used within the electrode, and when the electrode and the membrane are bonded together, since they are fused, the adhesion between the electrode and the membrane is good.

Furthermore, in spite of the polyperfluoroalkylsulfonic acid not having a crosslinked structure, its cohesive strength is high even in a state in which it has absorbed water, and it has the advantage that the electrode is resistant to peeling off even in an environment in which a large amount of moisture is present such as in the interior of the fuel cell.

On the other hand, the non-fluorine polymer electrolyte often becomes gelatinous, with low cohesive strength, when in a state in which it has absorbed water, and in such a state the strength is considerably degraded. In particular, when a non-fluorine polymer electrolyte is used as the polymer electrolyte within the electrode, the polymer electrolyte in the electrode might swell due to an aqueous solution of fuel, or water produced by power generation, thus greatly degrading the strength and making the electrode peel off so as to make it impossible to generate power. Because of this, even when a non-fluorine polymer electrolyte membrane is used as the electrolyte membrane, the electrode mainly employs a polyperfluoroalkylsulfonic acid, which is a fluorine-based polymer electrolyte.

For the above-mentioned reasons, a polyperfluoroalkylsulfonic acid is often used as the polymer electrolyte used within the electrode. As represented by polytetrafluoroethylene, fluorine-based polymers have low affinity with non-fluorine polymer materials and are poorly adhesive materials. Furthermore, since adhesion between the polyperfluoroalkylsulfonic acid membrane and the non-fluorine polymer used in the electrolyte membrane is poor, a fuel cell employing a non-fluorine polymer electrolyte membrane and a fluorine-based polymer electrolyte has the problem that the interface between the electrode and the membrane easily peels apart when it is running.

Moreover, there are the problems that the polyperfluoroalkylsulfonic acid membrane swells due to methanol used in a DMFC, the performance easily deteriorates, and even if the electrolyte membrane is able to cope with a high concentration of methanol, its advantages cannot be made fully utilized.

To meet such a demand, JP-A-2002-164055 (Patent Publication 1; JP-A denotes a Japanese unexamined patent publication application) proposes the use of an ion-exchange group-containing hydrocarbon-based polymer that is sparingly soluble in water but is soluble in an organic solvent as an electrode electrolyte.

Such a polymer that is sparingly soluble in water but is soluble in an organic solvent has the problem that, since its solubility in water increases when the concentration of the ion-exchange group increases, the concentration of the ion-exchange group cannot be increased.

That is, since the ion-exchange group is intrinsically hydrophilic, in order to maintain the property of being sparingly soluble in water and being soluble in an organic solvent, the amount of ion-exchange group cannot be increased. Under such conditions a proposal has been made to impart some degree of crosslinking to the interior of the polymer, but since it is intrinsically soluble in an organic solvent, a problem is caused when used in a methanol fuel cell in which it is in direct contact with methanol.

Furthermore, the present inventors have in WO03/075385 (Patent Publication 2) proposed an electrolyte membrane formed by filling, with the proton-conductive poly-2-acrylamido-2-methylpropanesulfonic acid, the pores of a porous substrate that has substantially no swelling in water or an organic solvent such as methanol.

This electrolyte membrane is suitable for a fuel cell, including a DMFC, and by using a non-fluorine polymer electrolyte membrane formed by filling a porous substrate with an inexpensive non-fluorine proton-conductive polymer, and using as the porous substrate a material that is resistant to deformation by an external force, such as polyimide or crosslinked polyethylene, the proton-conductive polymer with which the pores are filled does not swell excessively in a methanol aqueous solution, and as a result the permeation of methanol can be suppressed.

Furthermore, the present inventors have proposed an electrolyte membrane having a structure in which the pores of a porous substrate are filled with a polymer having ion-exchange properties, and the surface of the porous substrate is exposed, a membrane electrode assembly formed by thermocompression bonding the electrolyte membrane and an electrode at the softening point temperature of the porous substrate or higher, and a fuel cell employing same (Japanese Patent Application No. 2004-11482; Patent Publication 3). This proposal aims to improve the adhesion to an electrode by exposing, on the surface, part of the porous substrate forming the electrolyte membrane without making the electrolyte be present on the surface of the porous substrate.
(Patent Publication 1) JP-A-2002-164055
(Patent Publication 2) WO03/75385
(Patent Publication 3) Japanese Patent Application No. 2004-114822

This invention has been accomplished in the light of the above-mentioned circumstances, and it is an object thereof to provide an inexpensive fuel cell membrane electrode assembly that is suitable for a direct methanol fuel cell, and for which the adhesion between an electrode and a fuel cell electrolyte membrane formed from the above-mentioned non-fluorine polymer material is improved, a polymer electrolyte added to the electrode can cope sufficiently with a high concentration of methanol, the advantages of the electrolyte membrane can be fully exhibited, peeling apart of the electrode and the membrane does not occur while used as a fuel cell, and the productivity is high; a production process therefor; and a direct methanol fuel cell.

In order to attain the above-mentioned object, the invention described in Claim 1 is a fuel cell membrane electrode assembly comprising an electrolyte membrane having a non-fluorine polymer as a substrate and electrodes layered on opposite sides of the electrolyte membrane, at least one of the electrodes comprising a catalyst, an electrolyte, and a non-fluorine thermoplastic polymer.

Furthermore, the invention described in Claim 2 is the fuel cell membrane electrode assembly according to Claim 1, wherein the electrolyte forming the electrode is an insoluble polymer electrolyte having a crosslinked structure.

Moreover, the invention described in Claim 3 is the fuel cell membrane electrode assembly according to Claim 1 or 2, wherein the electrolyte forming the electrode is a non-fluorine polymer electrolyte.

Furthermore, the invention described in Claim 4 is the fuel cell membrane electrode assembly according to either Claim 1 or 2, wherein the electrolyte forming the electrode is a non-fluorine polymer electrolyte in the anode side electrode and a fluorine-based polymer electrolyte in the cathode side electrode.

Moreover, the invention described in Claim 5 is the fuel cell membrane electrode assembly according to any one of Claims 1 to 4, wherein the non-fluorine thermoplastic polymer forming the electrode has a softening temperature in the range of 70°C to 200°C.

Furthermore, the invention described in Claim 6 is the fuel cell membrane electrode assembly according to any one of Claims 1 to 5, wherein the non-fluorine thermoplastic polymer forming the electrode is a polyolefin.

Moreover, the invention described in Claim 7 is the fuel cell membrane electrode assembly according to Claim 1, wherein the electrolyte membrane is formed by filling with a polymer electrolyte the pores of a porous substrate comprising a non-fluorine polymer.

Furthermore, the invention described in Claim 8 is the fuel cell membrane electrode assembly according to Claim 7, wherein the electrolyte membrane has part of the substrate exposed on the surface of the membrane.

Moreover, the invention described in Claim 9 is the fuel cell membrane electrode assembly according to Claim 7 or 8, wherein the non-fluorine polymer is a polyolefin or a modified polyolefin.

Furthermore, the invention described in Claim 10 is a process for producing a fuel cell membrane electrode assembly, the process comprising layering an electrode formed from a catalyst, an electrolyte, and a non-fluorine thermoplastic polymer on at least one side of an electrolyte membrane having a non-fluorine polymer as a substrate, and bonding the electrode to the electrolyte membrane by thermocompression bonding.

Moreover, the invention described in Claim 11 is the process for producing a fuel cell membrane electrode assembly according to Claim 10, wherein the electrolyte forming the electrode is prepared by polymerizing an ion-exchange group-containing monomer in the presence of a crosslinking agent and a catalyst.

Furthermore, the invention described in Claim 12 is a direct methanol fuel cell comprising the fuel cell membrane electrode assembly according to any one of Claims 1 to 9.

### BRIEF DESCRIPTION OF DRAWING

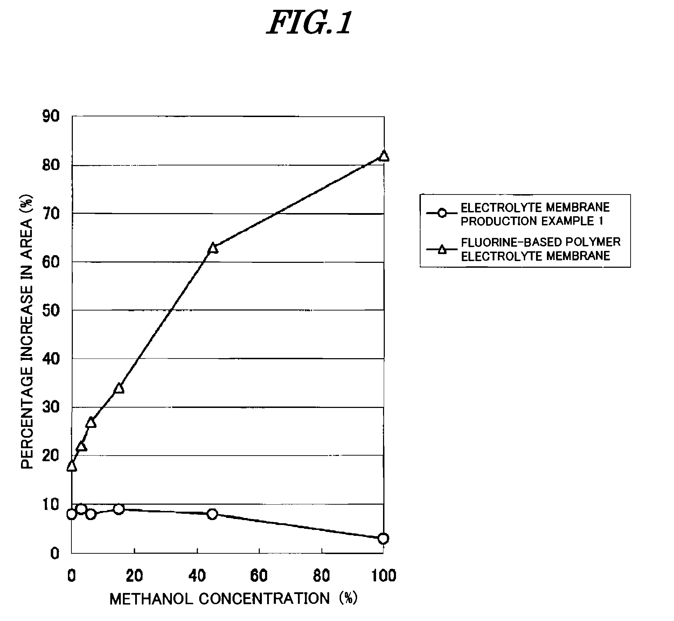

(FIG. 1)A diagram showing concentration-percentage change in area in methanol aqueous solutions having different concentrations with respect to Electrolyte Membrane Production Example 1 and the commercially available fluorine-based electrolyte membrane used in Comparative Example 3.

### EXPLANTATION OF REFERENCE SYMBOLS AND NUMERALS

None

With regard to the fuel cell membrane electrode assembly of this invention, an electrolyte membrane employs a non-fluorine polymer as a substrate and, of electrodes layered on opposite sides of the electrolyte membrane, the electrode on at least one side is formed from a catalyst, an electrolyte, and a non-fluorine thermoplastic polymer.

More specifically, with regard to the fuel cell membrane electrode assembly of this invention, among electrodes formed on opposite sides of an electrolyte membrane having a non-fluorine polymer as a substrate, the electrode on at least one side is formed from a catalyst, an electrolyte, and a non-fluorine thermoplastic polymer. In this arrangement, it is preferable that the electrodes on both sides are formed from an electrolyte and a non-fluorine thermoplastic polymer, but when the above-mentioned electrode is only on one side, the effect that is the object of this invention can be obtained by an arrangement in which the electrode on the anode side is formed from a catalyst, an electrolyte, and a non-fluorine thermoplastic polymer.

That is, by employing an electrolyte membrane having a non-fluorine thermoplastic polymer as a substrate, the permeation of methanol from the anode side to the cathode side can be suppressed adequately.

ln such a case, it is not always necessary to make the cathode side able to cope with a high concentration of methanol, but use of the above-mentioned electrode enables the cost to be reduced. However, since the cathode side is continuously exposed to an oxidizing atmosphere, when particularly high oxidation resistance is required, a fluorine-based polymer may be selected.

The electrode in the fuel cell membrane electrode assembly of this invention is formed from a catalyst, an electrolyte, and a non-fluorine thermoplastic polymer, and details thereof are explained below. This electrode may contain another component in addition to the above-mentioned three components and, for example, a fluorine-based polymer such as PTFE, which is often used in a fuel cell for the purpose of imparting water repellency, may be used in combination.

The catalyst used in the electrode has the function of promoting a reaction at the anode and the cathode of the fuel cell and is an essential component for the fuel cell electrode. The type of catalyst used is not particularly limited as long as it is one that is normally used in a fuel cell. For example, microparticles of a noble metal such as platinum may be used.

With regard to the noble metal catalyst, one forming microparticles on its own, such as, for example, platinum black, may be used by mixing with another catalyst layer component. Alternatively, it may be added in a form in which it is supported on a conductive support such as carbon black.

Furthermore, as the noble metal catalyst, platinum, etc. may be used on its own, but another metal may be used in combination by mixing or alloying. As an example thereof, the combined use of platinum and ruthenium is widely carried out in order to reduce poisoning of the catalyst by carbon monoxide on the anode side.

With regard to the above-mentioned non-fluorine thermoplastic polymer, those that soften or melt in a thermocompression bonding step when forming an MEA but do not melt at the temperature of the cell when it is running are preferable, those that are electrochemically stable are more preferable, and those having hardly any polar groups, such as polyolefin polymers, are particularly preferable since they can withstand the severe environment of the interior of a fuel cell for a long period of time.

As such a non-fluorine thermoplastic polymer, it is preferable to use one having a softening temperature in the range of 70°C to 200°C, and more preferably in the range of 90°C to 150°C. It is not preferable for the softening temperature to be less than 70°C since the thermoplastic polymer resoftens/remelts due to heat generated by the running of the fuel cell or an electrode reaction, thus making cell performance unstable. It is also not preferable for the softening temperature to exceed 200°C since it is then necessary to set the temperature when forming an MEA at a high temperature and the polymer electrolyte is easily degraded. There are various methods for measuring softening temperature, and examples thereof include a Vicat softening temperature in accordance with JIS K7206.

In this invention, it is also possible to laminate the non-fluorine thermoplastic polymer in a molten state to the electrode, which is preferable for the purpose of obtaining a higher adhesive strength, but since compression is normally carried out at the same time as heating when an MEA is produced, adhesive strength can also be obtained in the softened state.

The melting temperature, that is, the melting point, is higher than the softening temperature, and in general a polymer has a melting point that is higher than the softening temperature by on the order of 10°C to 20°C.

Specific examples of such a thermoplastic polymer include polyolefins such as low density polyethylene, high density polyethylene, and polypropylene, a hydrogenated styrene butadiene copolymer, polyamide, and polyester. They may be used singly or in a combination of a plurality thereof, and the form of the thermoplastic polymer when it is mixed is not particularly limited, but it is preferable to use it in the form of a powder or a dispersion since the workability when preparing a catalyst dispersion by mixing with a catalyst, etc. is good.

The electrolyte forming the electrode is formed from a material having an ion-exchange group in the same way as in the case of the electrolyte membrane, is used for both the anode and the cathode electrodes of the fuel cell, and has the function of an ionic conduction path for moving ions such as protons generated within the electrode to an electrolyte membrane and further moving them to the electrode on the opposite side.

Such an electrolyte may be any electrolyte that is normally used in a fuel cell, and examples of an electrolyte that is widely used include a polyperfluoroalkylsulfonic acid.

This polyperfluoroalkylsulfonic acid is normally available in a state in which it is dissolved in an alcohol, etc., and a catalyst layer is formed by mixing it with a component such as a catalyst to give a catalyst dispersion and applying and drying it.

The polyperfluoroalkylsulfonic acid is an uncrosslinked linear polymer but has the property of being hard to easily dissolve in water, etc. once it is dried, and it is therefore normally used without any particular crosslinking.

In this invention, the combined use with a non-fluorine thermoplastic polymer enables the non-fluorine polymer electrolyte, which conventionally has a problem with adhesion, to be used as an electrode electrolyte. ln particular, in an electrode on the anode side that is in contact with methanol, it is preferable to use a non-fluorine polymer electrolyte. On the cathode side, when it is exposed to an oxidizing atmosphere, the use of a fluorine-based polymer electrolyte might be preferable. The non-fluorine polymer electrolyte that can be used is not particularly limited as long as it can be used in a fuel cell, but if the number of ion-exchange groups in the non-fluorine polymer electrolyte is increased in order for high performance as a fuel cell to be exhibited, it easily dissolves in water even after a catalyst ink is dried, and the performance as a fuel cell cannot be maintained.

Because of this, it is preferable for it to have a crosslinked structure so that it is in a state in which it is insoluble in water within a catalyst layer. Examples of such a non-fluorine polymer electrolyte include those formed by grinding a crosslinked gel polymer, those formed by mixing a catalyst and an uncrosslinked polymer and then subjecting them to crosslinking, and those formed by mixing a catalyst, an ion-exchange group-containing monomer, and a crosslinking agent, and then subjecting them to polymerization as well as crosslinking.

Among them, a method in which after a catalyst, an ion-exchange group-containing monomer, and a crosslinking agent are mixed, the mixture is subjected to polymerization and crosslinking to thus obtain a non-fluorine polymer electrolyte is preferable since the ion-exchange group-containing monomer has a low molecular weight, is a liquid, and therefore can penetrate into fine gaps of a catalyst such as carbon-supported platinum, and the catalyst can be utilized effectively.

As an example of forming a non-fluorine polymer electrolyte by such polymerization, a method in which a polymer is formed using a radically polymerizable monomer may preferably be used, and it may be carried out by, for example, a method in which, after mixing an ion-exchange group-containing monomer, which is a constituent of the polymer, a fuel cell catalyst and, furthermore, a component such as a polymerization initiator, the mixture is subjected to heating to thus effect radical polymerization.

As the ion-exchange group-containing monomer, a sulfonic acid group-containing vinyl compound or a phosphoric acid group-containing vinyl compound is preferable since the proton conductivity is excellent. Examples thereof include vinylsulfonic acid, styrenesulfonic acid, allylsulfonic acid, methallylsulfonic acid, and 2-acryloyloxyethylenephosphoric acid, and 2-methylpropane-2-(meth)acrylamidosulfonic acid is preferable due to its high polymerizability.

It is also preferable to polymerize these monomers with a crosslinking agent added thereto since a polymer thus obtained by polymerization is resistant to being leached out. A compound that can be used as the crosslinking agent has at least two polymerizable functional groups per molecule, and by carrying out polymerization by mixing it with the above-mentioned monomers, crosslinked sites are formed in the polymer, thus giving a polymer having a three-dimensional network structure that does not dissolve or melt.

Specific examples of the crosslinking agent include *N*,*N*'-methylenebis(meth)acrylarnide, *N*,*N*'-ethylenebis(meth)acrylamide, *N,N*'-propylenebis(meth)acrylamide, *N*,*N'*-butylenebis(meth)acrylamide, polyethylene glycol di(meth)acrylate, polypropylene glycol di(meth)acrylate, trimethylolpropane diallyl ether, pentaerythritol triallyl ether, divinylbenzene, bisphenol di(meth)acrylate, isocyanuric acid di(meth)acrylate, tetraallyloxyethane, and triallylamine.

In this invention, the proportion of the crosslinking agent is in the range of 5 to 70 weight % relative to the total amount of ion-exchange group-containing polymerizable monomer and crosslinking agent used, and more preferably 10 to 50 weight %. It is not desirable for the proportion of the crosslinking agent to be less than this range since the polymer electrolyte swells within the electrode, and the volume changes greatly, thereby varying the performance; furthermore, a flow path for fuel or gas is obstructed and the performance is thereby easily degraded. On the other hand, it is not desirable for the amount of crosslinking agent to be greater than this range since the amount of ion-exchange group becomes too small, and power generation performance is degraded.

Furthermore, the crosslinking functional group is not limited to those having a carbon-carbon double bond, and a di- or higher-functional epoxy compound, etc. may be used, although they are inferior since the polymerization reaction rate is low. When an epoxy compound is used, a carboxyl group-containing monomer such as acrylic acid is copolymerized in the polymer, and crosslinking may be carried out by a reaction with the carboxyl group derived therefrom, or a copolymerizable compound having a hydroxyl group, etc. may be added as a third component to the monomer composition. These crosslinking agents may be used singly or in a combination of two or more types as necessary.

In this invention, as a component forming the non-fluorine polymer electrolyte used in the electrode, a third copolymerization component having no protonic acid group may be added as necessary in order to adjust the swelling properties, etc. of the polymer. The third component is not particularly limited as long as it can copolymerize with the ion-exchange group-containing monomer and the crosslinking agent used in this invention, and examples thereof include (meth)acrylic acid esters, (meth)acrylamides, maleimides, styrenes, vinyl organic acid esters, allyl compounds, and methallyl compounds.

Among the above-mentioned polymerization means, radical polymerization is desirable since the polymerization reaction is easy to control and a desired electrolyte membrane is obtained with good productivity by a relatively simple process.

As an initiator for radical polymerization, those that are used for thermal polymerization such as azobis types or peroxide types may preferably be used. In this invention, since the ion-exchange group-containing monomer has a low molecular weight, it is possible to carry out polymerization after the monomer has been made to penetrate into fine gaps in the catalyst particles, and catalyst particles in a section where a polymer electrolyte with a large molecular size cannot penetrate can thus be made to function.

When an electrode polymer electrolyte is obtained by polymerization, a photopolymerization initiator may be used, but when it is mixed with a catalyst before polymerization, since the catalyst shields light, the polymerizablility is poor, there is less polymerization in the interior of the catalyst, and the usage is limited. In such a case, it is preferable to add the catalyst after photopolymerization is carried out or after the polymerization reaction is started, but the performance tends to be degraded compared with an electrode obtained by thermal polymerization.

A method employed when preparing an electrode by mixing the above-mentioned non-fluorine thermoplastic polymer, polymer electrolyte, and catalyst is not particularly limited, but there is, for example, the method below.
(1) A monomer composition solution is formed by dissolving an ion-exchange group-containing monomer constituting a polymer electrolyte, a crosslinking agent and, if necessary, an additive such as a polymerization initiator or a surfactant in water or a solvent.
(2) A catalyst and the monomer composition solution are mixed and allowed to stand for several days, thus making the monomer penetrate into the interior of the catalyst.
(3) Thermal polymerization is carried out.
(4) The polymer electrolyte thus prepared is ground.
(5) A plastic polymer is added and stirred and mixed to give a catalyst dispersion.
(6) A conductive substrate such as carbon paper is coated therewith to give an electrode.

Steps (1) to (6) above are cited as an example and, for example, the initiator used in (1) may be added in any step as long as it is prior to polymerization. The thermoplastic polymer added in (5) may be dispersed in the monomer composition solution from the beginning. Furthermore, in order to make the monomer penetrate into the interior of the catalyst, heating or irradiation with ultrasonic waves may be carried out. In this case, a polymerization initiator may be added after that step.

The electrolyte membrane of this invention is an electrolyte membrane with a non-fluorine polymer as a substrate, is preferably formed by filling pores of a porous substrate made of a thermoplastic polymer with an electrolyte, and has exposed on its surface a surface layer of the porous substrate.

The porous substrate used in the above-mentioned electrolyte membrane is not particularly limited in terms of material, but is preferably a material that has the property of being softened or melted by heating and, in particular, is a thermoplastic polymer; more preferably it is a material for which there is substantially no swelling in methanol or water. It is particularly desirable that the change in area when wetted with water compared with when it is dry is small or almost none. The percentage increase in area when the porous substrate is immersed in methanol or water changes depending on the immersion time and temperature, and in this invention the percentage increase in area when immersed in pure water at a temperature of 25°C for 1 hour is preferably no greater than 20% compared with when it is dry. It is more preferable for the porous substrate to be formed from a material having a hydrophobic surface.

When such a porous substrate is formed from a material having the property of softening or melting upon heating, in a thermocompression bonding step, which is normally carried out when bonding an electrode, it softens or melts so as to be united with a thermoplastic polymer in the interior of the electrode and be more strongly bonded thereto.

The softening temperature in this process may appropriately be selected according to the temperature at which the fuel cell is run, and it is necessary for it to be higher than a target fuel cell running temperature. That is, while taking into consideration the temperature range in which the solid polymer fuel cell is normally run, it is preferable for the softening temperature to be in the range of 70°C to 200°C. It is more preferably in the range of 90°C to 150°C.

When the softening temperature is too low, the temperature at which the fuel cell can run is limited, and since the fuel cell itself generates heat by a reaction, it cannot be used for a long period of time. Furthermore, it is not desirable for the softening temperature to be higher than this range since there is the problem that a functional group such as a sulfonic acid group within the electrolyte easily decomposes at the temperature at which compression bonding is carried out, or the problem that the electrolyte or carbon, which is a catalyst element, is easily oxidatively degraded by the action of the catalyst within the electrode.

The porous substrate used in this invention is preferably formed from a hydrophobic material. Use of the hydrophobic material makes it difficult for unwanted water to build up at the interface between the membrane and the catalyst, and makes it difficult for a phenomenon called flooding to occur, which easily causes a decrease in output during running of a fuel cell.

With regard to the porous substrate, the tensile modulus of elasticity is preferably 500 to 5000 MPa, and more preferably 1000 to 5000 MPa. The breaking strength is preferably 50 to 500 MPa, and more preferably 100 to 500 MPa.

When they are lower than these ranges, the membrane easily deforms due to a force caused when the filled polymer tries to swell in methanol or water, and when they are higher than the above ranges, the substrate becomes too brittle and the membrane easily cracks during press-molding when bonding an electrode or during tightening, etc. when assembling into a cell. Furthermore, the porous substrate preferably has heat resistance to a fuel cell running temperature and resistance to external force so that it does not easily stretch.

Examples of materials having the above-mentioned properties include thermoplastic polymers such as polyolefin, halogenated polyolefin, polysulfone, polyphenylene oxide, polyamide, and polyester, and polymers such as modified polyolefin to which resistance to deformation such as stretching caused by an external force is imparted by a method such as drawing or crosslinking by exposing a polyolefin to radiation or the addition of a crosslinking agent. These materials may be used singly or made into a composite by a method such as layering two or more types thereof.

Among these porous substrates, it is preferable to use one formed from a drawn polyolefin, a crosslinked polyolefin, or a polyolefin that has been crosslinked subsequent to drawing since they are readily available and the workability during a filling step is good. Among the polyolefins, those having polyethylene as a main component are excellent in terms of hydrophobicity, durability, availability, etc.

The porosity of the porous substrate obtained as above is preferably 5% to 95%, more preferably 5% to 90%, and particularly preferably 20% to 80%. Furthermore, the average pore size is preferably in the range of 0.001 to 100 µm, and more preferably 0.01 to 1 µm. When the porosity is too small, the number of ion-exchange groups per unit area is too small and the output as a fuel cell is low, and when it is too large the membrane strength is undesirably degraded.

Moreover, the thickness of the substrate is preferably no greater than 200 µm. It is more preferably 1 to 150 µm, yet more preferably 5 to 100 µm, and particularly preferably 5 to 50 µm. When the membrane thickness is too small, the membrane strength is degraded, and the permeation of methanol increases, and when it is too large, the membrane resistance becomes too large and the output of a fuel cell is too low, both being undesirable.

When a thermoplastic polymer is used in the electrode, the adhesion of the electrode to the non-fluorine polymer electrolyte membrane improves, and by an optimum combination with the material used for the electrolyte membrane, stronger adhesion can be obtained. When the non-fluorine polymer forming the porous substrate is a polyolefin such as polyethylene or polypropylene, it is preferable to use a polyolefin such as polyethylene as the thermoplastic polymer of the electrode.

When the electrolyte membrane used in this invention is a non-fluorine polymer electrolyte membrane, an effect in improving the adhesion to the electrode can be obtained, and as the electrolyte membrane used, one formed by filling pores of a porous substrate made of, for example, the above-mentioned non-fluorine polymer with an ion-exchange group-containing non-fluorine polymer electrolyte may preferably be used.

A method for filling with the polymer electrolyte is not particularly limited, but it may be achieved by impregnating a porous substrate with a solution of a polymer electrolyte or with a molten polymer electrolyte, or by impregnating a porous substrate with a monomer forming a polymer electrolyte or a solution or dispersion thereof, followed by polymerization. In this process, the monomer or the solution thereof, etc. used for filling may contain a cross-linking agent, a polymerization initiator, a catalyst, a curing agent, a surfactant, etc. as necessary. Furthermore, an ion-exchange group may be included in advance in a monomer, or may be introduced into a polymer by a step such as sulfonation after filling.

The polymer electrolyte having an ion-exchange group with which pores of the porous substrate are filled in this invention is not particularly limited, and a normally known one may be used. For example, a polymer electrolyte obtained by radical polymerization may preferably be used. As described in Patent Publications 1 and 2 above, etc., it may be obtained by a method in which, after a porous substrate is impregnated with an ion-exchange group-containing monomer, which is a component forming the polymer electrolyte, polymerization is carried out using ultraviolet rays, etc.

Among ion-exchange group-containing monomers, a sulfonic acid group-containing vinyl compound or a phosphoric acid group-containing vinyl compound is preferable because of excellent proton conductivity, and 2-methylpropane-2-(meth)acrylamidosulfonic acid is more preferable due to its high polymerizablility.

It is also preferable to polymerize these monomers with a crosslinking agent added thereto since a polymer thus obtained by polymerization is resistant to being leached out. A compound that can be used as the crosslinking agent has at least two polymerizable functional groups per molecule, and by carrying out polymerization by mixing it with the above-mentioned monomers, crosslinked sites are formed in the polymer, thus giving a polymer having a three-dimensional network structure that does not dissolve or melt.

Specific examples thereof include *N*,*N*'-methylenebis(meth)acrylamide, *N*,*N*'-ethylenebis(meth)acrylamide, *N*,*N*'-propylenebis(meth)acrylamide, *N*,*N*'-butylenebis(meth)acrylamide, polyethylene glycol di(meth)acrylate, polypropylene glycol di(meth)acrylate, trimethylolpropane diallyl ether, pentaerythritol triallyl ether, divinylbenzene, bisphenol di(meth)acrylate, isocyanuric acid di(meth)acrylate, tetraallyloxyethane, and triallylamine.

Furthermore, the crosslinking functional group is not limited to those having a carbon-carbon double bond, and a di- or higher-functional epoxy compound, etc. may be used, although they are inferior since the polymerization reaction rate is low. When an epoxy compound is used, as in the case with the polymer electrolyte for the electrode, crosslinking may be carried out by a reaction with an acid such as a carboxyl group in the polymer, or a copolymerizable compound having a hydroxyl group, etc. may be added as a third component to a monomer composition. These crosslinking agents may be used singly or in a combination of two or more types as necessary.

A third copolymerization component having no protonic acid group may be added to the above monomer composition as necessary in order to adjust the swelling properties, etc. of the polymer obtained.

The third component is not particularly limited as long as it can copolymerize with the ion-exchange group-containing monomer and the crosslinking agent used in this invention, and examples thereof include (meth)acrylic acid esters, (meth)acrylamides, maleimides, styrenes, vinyl organic acids, allyl compounds, and methallyl compounds.

Among the above-mentioned polymerization means, polymerization that is photoinitiated by ultraviolet rays is desirable since the polymerization reaction is easy to control and a desired electrolyte membrane is obtained with good productivity by a relatively simple process. Furthermore, when photoinitiated polymerization is carried out, it is more preferable to dissolve or disperse a radical photopolymerization initiator in a monomer or a solution or a dispersion thereof in advance.

It is desirable that the electrolyte membrane of this invention has a surface layer of the porous substrate exposed on the surface, and a production process therefor is explained below.

As a simple method, a method in which, after carrying out filling, a polymer electrolyte layer formed on the surface is scraped off may be used. When carrying this out, a method involving rubbing with a brush, a nylon scrubber, etc., or a method involving scraping off with a scraper, etc. may be used. Furthermore, in this case it is desirable to carry it out while making the polymer electrolyte attached to the surface swell by dampening the membrane with water. When the polymer layer adheres strongly to the surface, it can easily be removed by scraping off by dampening it with an alkaline aqueous solution of sodium hydroxide, potassium hydroxide, sodium carbonate, potassium carbonate, etc., but it is necessary to carry out washing with an acid afterward so as to convert internal ion-exchange groups into protonic acid types.

The electrolyte membrane thus produced may preferably be used in a solid polymer fuel cell and, in particular, in a direct methanol fuel cell. It is widely known that, when an electrolyte membrane is used in such a fuel cell, an integrated membrane electrode assembly (MEA) may be formed by sandwiching the electrolyte membrane between two electrode sheets to which a catalyst represented by platinum has been applied, and carrying out hot pressing, etc., and then used by being incorporated into a fuel cell. In this invention, an MEA may be formed by the same method and used by incorporating it into a fuel cell.

The MEA of this invention is prepared via a step in which the above-mentioned non-fluorine polymer electrolyte membrane is sandwiched between a pair of electrodes to which the non-fluorine thermoplastic polymer has been added and hot pressing is carried out, and in this step, the non-fluorine thermoplastic polymer in the electrode not only functions as a binder for the catalyst within the electrode but also is fused to the non-fluorine polymer electrolyte membrane, thus strongly bonding the electrode and the electrolyte membrane.

It is also surmised that, by ensuring the adhesive strength by means of the non-fluorine thermoplastic polymer, even when a non-fluorine polymer electrolyte, which is conventionally difficult to use due to insufficient adhesion, is introduced into the electrode, the electrode does not peel off, and stable cell performance can be obtained.

The fuel cell membrane electrode assembly of this invention is a membrane electrode assembly in which, when a non-fluorine polymer electrolyte membrane is used in the MEA, a non-fluorine thermoplastic polymer is added to the interior of the electrode together with a polymer electrolyte, the non-fluorine thermoplastic polymer exhibiting adhesion to the electrolyte membrane by being softened on being heated with the electrolyte membrane, and the non-fluorine thermoplastic polymer and the polymer electrolyte taking their respective roles; in the interior of the electrode, by separating the electrolyte component and the adhesive component, adhesion to the electrode, which has been considered to be a defect of the non-fluorine polymer electrolyte membrane, is improved, and use of the non-fluorine polymer electrolyte in the electrode, which has conventionally been difficult, becomes possible.

Furthermore, in this MEA, by strengthening the adhesion to the electrode using the electrolyte membrane having the porous substrate exposed on the surface of the electrolyte membrane, the membrane electrode assembly can maintain cell performance for a long period of time.

Moreover, the membrane electrode assembly of this invention can enhance the adhesion strength between the electrode and the membrane by adding the thermoplastic polymer to the interior of the electrode, the adhesion to the electrode, which is a problem with conventional non-fluorine polymer electrolyte membranes, is improved, the adhesive state can be sustained even in a wet state when the cell is running, stable cell performance can be exhibited, adhesion to the electrode can similarly be maintained in a case in which the non-fluorine polymer electrolyte is used in the electrode, and stable performance can be exhibited even when using a reduced amount of fluorine-based polymer or without using any at all.

### Examples

### Electrolyte Membrane Production Example 1

A crosslinked polyethylene porous membrane (thickness 30 µm, porosity 37%, average pore size about 0.1 µm) as a substrate was immersed in a monomer composition aqueous solution formed from 35 g of 2-acrylamido-2-methylpropanesulfonic acid (product name ATBS, manufactured by Toagosei Co., Ltd.), 15 g of *N*,*N'*-ethylenebisacrylamide, 0.005 g of a nonionic surfactant, 0.005 g of a UV radical generator, and 50 g of water, thereby impregnating it with the aqueous solution.

Subsequently, the porous substrate was withdrawn from the solution, and sandwiched between 50 µm thick PET films so that no bubbles were formed. The front and back sides were then irradiated with ultraviolet rays at 1000 mJ/cm² using a high pressure mercury lamp.

After irradiation, the PET film was removed by peeling off, the surface was rubbed with a resin fiber nonwoven cloth scrubber while wetting the surface with pure water to thus remove resin attached to the surface, and the membrane was dried naturally, thus giving an electrolyte membrane. When water droplets were applied to the surface of the electrolyte membrane, water was repelled, suggesting that the surface of the crosslinked polyethylene porous membrane used as a substrate was exposed.

The proton conductivity of this electrolyte membrane was 4.1 S/cm², and the methanol permeation flux was 0.09 kg/(m²·h). This electrolyte membrane and a commercial fluorine-containing polymer electrolyte membrane (Nafion 117, manufactured by DuPont) used in Comparative Example 3 were immersed in methanol aqueous solutions at 25°C for 1 hour, and the percentage increases in area relative to a dry membrane were measured and are shown in FIG. 1.

From these results it has been found that, for the fluorine-containing polymer electrolyte membrane, the higher the methanol concentration, the greater the change in area due to swelling, but for the electrolyte membrane prepared in this Production Example 1, the concentration dependence is remarkably small.

Furthermore, when the methanol permeation fluxes in Table 1 are compared, the membrane of this production example has very small permeation of methanol compared with the fluorine-containing polymer electrolyte membrane, and it has been found, in line with the results in FIG. 1, that high concentration methanol can be used as fuel. The membrane thus obtained was sandwiched between catalyst-equipped electrodes of each of Examples and Comparative Examples, hot-pressed to give an MEA, and evaluated as a direct methanol fuel cell.

### Example 1

### Use of electrode formed from catalyst, fluorine-based polymer electrolyte, and non-fluorine thermoplastic polymer

60 g of a catalyst having platinum and ruthenium supported on carbon black (product name TEC61E54, manufactured by Tanaka Kikinzoku Kogyo K.K.), 25 g on a solids basis of a 5 weight % solution of a fluorine-based polymer electrolyte (product name Nafion, manufactured by DuPont) as an electrolyte, and 10 g of a low density polyethylene powder having a Vicat softening point of 96°C and a melting point of 112°C (product name FLO-THENE UF-1.5, manufactured by Sumitomo Seika Chemicals Co., Ltd.) as a non-fluorine thermoplastic polymer were stirred and mixed in a ball mill to give an anode catalyst dispersion. This was applied to one side of a carbon paper (product name TGP-H-060, manufactured by Toray Industries, Inc.) and dried to give an anode electrode.

Similarly, a cathode catalyst dispersion was prepared using the same composition as for the anode side except that a catalyst having platinum supported on carbon black (TEC10E50E, manufactured by Tanaka Kikinzoku Kogyo K.K.) was used. This was applied to one side of a carbon paper to which water repellency had been imparted by PTFE (TGP-H-060, manufactured by Toray Industries, Inc.) and dried to give a cathode electrode.

The non-fluorine polymer electrolyte membrane prepared in Electrolyte Membrane Production Example 1 was sandwiched between this pair of electrodes and hot-pressed at 120°C to give an MEA. When it was evaluated as a direct methanol fuel cell, good power generation performance was exhibited. These evaluation results are summarized in Table 1. Apart from this, the adhesive strength between the electrode and the electrolyte membrane was measured using the anode electrode by a method that will be described later, and the results are summarized in Table 2. It was found that, compared with the Comparative Examples, the adhesive strength between the electrode and the membrane was greatly improved.

### Example 2

### Use of electrode formed from catalyst, fluorine-based polymer electrolyte, and non-fluorine thermoplastic polymer

An MEA was obtained in the same manner as in Example 1 except that 10 g of a spherical high density polyethylene powder having a Vicat softening point of 124°C and a melting point of 130°C (product name FLO-BEADS HE-3040, manufactured by Sumitomo Seika Chemicals Co., Ltd.) was used as a non-fluorine thermoplastic polymer, and the temperature for hot pressing was 130°C.

When it was evaluated as a direct methanol fuel cell, good power generation performance was exhibited. These evaluation results are summarized in Table 1. Apart from this, the adhesive strength between the electrode and the electrolyte membrane was measured using the anode electrode by a method that will be described later and the results are summarized in Table 2. It was found that, compared with the Comparative Examples, the adhesive strength between the electrode and the membrane was greatly improved.

### Example 3

### Use of electrode formed from catalyst, non-fluorine polymer electrolyte, and non-fluorine thermoplastic polymer

60 g of a catalyst having platinum and ruthenium supported on carbon black (product name TEC64E, manufactured by Tanaka Kikinzoku Kogyo K.K.), 20 g of 2-acrylamido-2-methylpropanesulfonic acid (product name ATBS, manufactured by Toagosei Co., Ltd.), 5 g of N,N'-ethylenebisacrylamide, 0.3 g of an azobis type polymerization initiator (product name V-50, Wako Pure Chemical Industries, Ltd.), 50 g of water, 50 g of isopropyl alcohol, and 10 g of a polyethylene powder (product name FLO-THENE UF-1.5, manufactured by Sumitomo Seika Chemicals Co., Ltd.) as a non-fluorine thermoplastic polymer were mixed, stirred, and then heated at 60°C for 2 hours in a nitrogen atmosphere to thus effect polymerization. This was again stirred and mixed in a ball mill to give an anode catalyst dispersion.

This was applied to one side of a carbon paper (product name TGP-H060, manufactured by Toray Industries, Inc.) and dried to give an anode electrode. Similarly, a cathode catalyst dispersion was prepared using the same composition as for the anode side except that a catalyst having platinum supported on carbon black (TEC10E50E, manufactured by Tanaka Kikinzoku Kogyo K.K.) was used. This was applied to one side of carbon paper to which water repellency had been imparted by PTFE (TGP-H060, manufactured by Toray Industries, Inc.) and dried to give a cathode electrode.

The non-fluorine polymer electrolyte membrane prepared in Electrolyte Membrane Production Example 1 was sandwiched between this pair of electrodes and hot-pressed at 120°C to give an MEA.

When it was evaluated as a direct methanol fuel cell, good power generation performance was exhibited. These evaluation results are summarized in Table 2. This Example shows that a non-fluorine polymer electrolyte can be used in an electrode, and compared with the Comparative Examples the adhesive strength between the electrode and the membrane was high.

### Example 4

### Use of non-fluorine polymer in electrolyte of anode and fluorine-based polymer on cathode side

An MEA was obtained by hot pressing at 120°C using the cathode prepared in Example 1, the anode prepared in Example 3, and the electrolyte membrane of Production Example 1. When this MEA was evaluated as a direct methanol fuel cell, good power generation performance was exhibited. These evaluation results are summarized in Table 2. Degradation of the performance when power was generated for a long period of time using a 10 weight % methanol aqueous solution as fuel was suppressed compared with Example 1, in which Nafion was used also on the anode side. This Example shows that a non-fluorine polymer electrolyte can be used in an electrode. ln particular, by using on the anode side a non-fluorine polymer electrolyte, which is resistant to high concentration methanol, the performance at high concentration was better than in Example 1. Moreover, the adhesive strength between the electrode and the membrane was higher than in the Comparative Examples.

### Comparative Example 1

The same anode and cathode electrodes as in Example 1 were prepared except that a PTFE dispersion (softening temperature > 200°C, melting point 325°C) was used instead of the non-fluorine thermoplastic polymer, and the non-fluorine polymer electrolyte membrane prepared in Electrolyte Membrane Production Example 1 was sandwiched between this pair of electrodes and hot-pressed at 120°C to give an MEA. When it was evaluated as a direct methanol fuel cell, good power generation performance was exhibited, but adhesion to the electrode was about 1/3 of that of Example 1. These evaluation results are summarized in Table 2.

### Comparative Example 2

The same anode and cathode electrodes as in Example 1 were prepared except that, instead of the non-fluorine thermoplastic polymer, nothing was used, and the non-fluorine polymer electrolyte membrane prepared in Electrolyte Membrane Production Example 1 was sandwiched between this pair of electrodes and hot-pressed at 120°C to give an MEA.

When it was evaluated as a direct methanol fuel cell, good power generation performance was exhibited, but adhesion to the electrode was extremely low and about 1/5 of that of Example 1. These evaluation results are summarized in Table 2.

### Comparative Example 3

An MEA was prepared by hot pressing at 120°C using the electrodes prepared in Comparative Example 1 and a commercial fluorine-based electrolyte membrane (Nafion 117, manufactured by DuPont) as the electrolyte membrane. When the performance as a DMFC was measured, good performance was obtained when a 3 weight % methanol aqueous solution was used, but the performance was poor when a 10 weight % methanol aqueous solution was used.

These evaluation results are summarized in Table 1. The proton conductivity of the electrolyte membrane used was 3.8 S/cm², and the methanol permeation flux was 0.32 kg/(m²·h); compared with the non-fluorine polymer electrolyte membranes prepared in Electrolyte Membrane Production Examples 1 and 2, the amount of methanol permeating was large, and fuel loss was undesirably large as a DMFC. The cell performance in high concentration methanol was lower than when run in 3% methanol, and it was found that running with high concentration methanol, which is an object of the DMFC, could not be achieved.

### Evaluation Methods

### (1) Proton conductivity

An electrolyte membrane that had swollen after being immersed in pure water at a temperature of 25°C for 1 hour was sandwiched between two platinum plates to give a measurement sample. Measurement of AC impedance from 100 Hz to 40 MHz at a temperature of 25°C was then carried out to give the conductivity.

The higher the conductivity, the easier it is for protons to move in the electrolyte membrane, thus exhibiting its excellence in application to a fuel cell.

### (2) Permeability to methanol (penetration experiment at 25°C)

An electrolyte membrane was sandwiched between glass cells, one of the cells was charged with a 10 weight % methanol aqueous solution, and the other cell was charged with pure water. The amount of methanol penetrating to the pure water side was measured over time by gas chromatography, and a permeability coefficient when a steady state was attained was measured.

The lower the permeability coefficient, the harder it is for methanol to penetrate inside the electrolyte membrane, thus exhibiting its suitability in application to a direct methanol fuel cell.

### (3) Change in area in methanol aqueous solution

An electrolyte membrane was immersed in a methanol aqueous solution at 25°C for 1 hour, the area immediately after it was taken out and the area measured in advance when it was dry were compared, and the percentage increase in area was calculated. 'When it was dry' means a state immediately after the electrolyte membrane was dried in vacuum at 60°C for 5 hours.

### (4) Evaluation of fuel cell

The MEAs formed in the Examples and Comparative Examples were incorporated into single cell direct methanol fuel cells, and the cells were run under the following running conditions. Fuel was 3 wt % and 10 wt % aqueous solutions of methanol, the oxidizing agent was air, and the cell temperature was 50°C.

The current density output characteristics were measured by changing the load by means of an electronic load. Furthermore, when the life span was evaluated by running for a long period of time, running was carried out at a cell temperature of 60°C with a load of 0.1 A/cm² in a mode in which switching ON and OFF were carried out once a day.

### (5) Adhesion between electrode and membrane

An inner anode of a prepared electrode was superimposed on only one side of an electrolyte membrane, and they were bonded by hot pressing. This was formed into a strip having a width of 1 cm and a length of 5 cm, and the electrode side was affixed to a rigid plastic plate support having a width of 2 cm and a length of 6 cm via double-sided tape. A test piece thus prepared was immersed in water for 1 hour, one end of the membrane was peeled off a little and set in a tensile strength tester, and a 180 degree peel test was carried out at a peel speed of 50 mm/min in a wet state.

**(Table 1)**

| | Electrolyte membrane production example 1 | Commercial product |
|---|---|---|
| Proton conductivity [S/cm²] | 4.1 | 3.8 |
| Methanol permeation flux [kg/(m²·h)] | 0.09 | 0.32 |

**(Table 2)**

| | Adhesion strength (N/cm) | Maximum output (mW/cm²) | | Voltage after running for 100 hours (V) | |
|---|---|---|---|---|---|
| | | 3% methanol | 10% methanol | 3% methanol | 10% methanol |
| Example 1 | 0.82 | 48 | 53 | 0.38 | 0.23 |
| 2 | 0.56 | 46 | 55 | 0.38 | 0.25 |
| 3 | 0.81 | 37 | 42 | 0.28 | 0.32 |
| 4 | 0.81 | 45 | 56 | 0.36 | 0.34 |
| Comp. Ex. 1 | 0.23 | 47 | 54 | 0.39 | 0.22 |
| 2 | 0.14 | 43 | 47 | 0.38 | 0.19 |
| 3 | 0.17 | 44 | 32 | 0.38 | 0.12 |

The use in a fuel cell of a membrane electrode assembly (MEA) prepared by the process of this invention enables adhesion to the electrode, which is a defect of a hydrocarbon-based electrolyte membrane, to be improved, thus stabilizing cell performance. Furthermore, since hardly any changes due to leaching or swelling in high concentration methanol occur, its use in combination with an electrolyte membrane for which there is little methanol permeation and which is resistant to excessive swelling in high concentration methanol enables high concentration methanol to be used as a fuel, which is conventionally difficult.

Because of these advantages, it is extremely useful as an electrolyte membrane for a solid polymer fuel cell such as a direct methanol fuel cell.

## Claims

1. A fuel cell membrane electrode assembly comprising: an electrolyte membrane having a non-fluorine polymer as a substrate; and an electrode layered on opposite sides of the electrolyte membrane, at least one of the electrodes comprising a catalyst, an electrolyte, and a non-fluorine thermoplastic polymer.

2. The fuel cell membrane electrode assembly according to Claim 1, wherein the electrolyte forming the electrode is an insoluble polymer electrolyte having a crosslinked structure.

3. The fuel cell membrane electrode assembly according to either Claim 1 or 2, wherein the electrolyte forming the electrode is a non-fluorine polymer electrolyte.

4. The fuel cell membrane electrode assembly according to either Claim 1 or 2, wherein the electrolyte forming the electrode is a non-fluorine polymer electrolyte in the anode side electrode and a fluorine-based polymer electrolyte in the cathode side electrode.

5. The fuel cell membrane electrode assembly according to any one of Claims 1 to 4, wherein the non-fluorine thermoplastic polymer forming the electrode has a softening temperature in the range of 70°C to 200°C.

6. The fuel cell membrane electrode assembly according to any one of Claims 1 to 5, wherein the non-fluorine thermoplastic polymer forming the electrode is a polyolefin.

7. The fuel cell membrane electrode assembly according to Claim 1, wherein the electrolyte membrane is formed by filling with a polymer electrolyte the pores of a porous substrate comprising a non-fluorine polymer.

8. The fuel cell membrane electrode assembly according to Claim 7, wherein the electrolyte membrane has part of the substrate exposed on the surface of the membrane.

9. The fuel cell membrane electrode assembly according to either Claim 7 or 8, wherein the non-fluorine polymer is a polyolefin or a modified polyolefin.

10. A process for producing a fuel cell membrane electrode assembly, the process comprising: layering an electrode formed from a catalyst, an electrolyte, and a non-fluorine thermoplastic polymer on at least one side of an electrolyte membrane having a non-fluorine polymer as a substrate, and bonding the electrode to the electrolyte membrane by thermocompression bonding.

11. The process for producing a fuel cell membrane electrode assembly according to Claim 10, wherein the electrolyte forming the electrode is prepared by polymerizing an ion-exchange group-containing monomer in the presence of a crosslinking agent and a catalyst.

12. A direct methanol fuel cell comprising the fuel cell membrane electrode assembly according to any one of Claims 1 to 9.
